# EUROPEAN PATENT SPECIFICATION

(11) **EP 2 720 897 B1**
(45) Date of publication and mention of the grant of the patent: **02.11.2016**
(21) Application number: 12734794.6
(22) Date of filing: 12.06.2012
(51) Int. Cl.: B60K 15/05

(54) **CLOSURE SYSTEM ON A FUEL TANK**
VERSCHLUSSSYSTEM AUF EINEM KRAFTSTOFFTANK
SYSTÈME DE FERMETURE SUR UN RÉSERVOIR DE CARBURANT

(30) Priority: 17.06.2011 DE 102011105197
(43) Date of publication of application: 23.04.2014
(73) Proprietor: Kautex Textron GmbH & Co. KG, 53229 Bonn (DE)
(72) Inventor: WOLF, Hartmut, 53639 Königswinter (DE)
(74) Representative: Kierdorf Ritschel Richly
(86) International application number: PCT/EP2012/002475
(87) International publication number: WO 2012/171630

(56) References cited:
- JP-A- 2004 190 806
- US-A- 4 635 945
- US-A1- 2008 197 578

## Description

The invention relates to a closure system on a fuel tank comprising an opening in the wall of the fuel tank and a closure cover which covers the opening and clamps at least one elastomer seal between itself and a border of the tank wall enclosing the opening. Such a closure system is known for example from DE 103 37 796 A1. DE 103 37 796 A1 describes a closure system of the type described above with a low-permeation seal to reduce the permeation of hydrocarbons from a tank. The low-permeation seal comprises an elongate body with a contact area and a diffusion barrier layer, fastened along the contact area of the elongate body. The diffusion barrier layer has opposing edges, arranged at a distance from one another, in order to define a slot. The diffusion barrier layer partially covers the elongate body in order to allow the elongate body to expand through the slot. This solution is intended to address the problem that the property of low permeability of elastomer seals is in inverse proportion to the sealing capability of the material.

A closure system of the type described above is also known for example from DE 196 27 395. The fuel tank described there has an opening with a neck which surrounds the opening in the tank wall and is closed by a holding cover, intended for holding for example lines, filling level indicators, pumps or the like, with an interposed sealing ring formed as an O-ring. Such a sealing ring usually consists of an elastomer which has relatively good barrier properties with regard to the hydrocarbons contained in the tank.

It is known to substitute fuels made from fossil hydrocarbons to a greater or lesser extent by so-called biofuels based on ethanol. Recently, modern fuels have varying added amounts of ethanol. Sealing systems that are optimized with regard to shielding from hydrocarbons often use elastomer seals based on fluororubber. Hydrocarbons are chemically nonpolar systems, which in principle require different sealing measures than chemically polar systems such as alcohols or alcohol-containing additives would require.

In order to ensure a corresponding alcohol resistance, the currently used fluoroelastomers would have to have a greater fluorine component, which would lead to a greater hardness and a higher glass transition temperature. This is at the expense of the durability of the material and actually reduces the sealing capability at the interfaces of the seal with the fuel tank.

Elastomer seals that are intended to be brought into contact with different media on opposite sides are known in principle. Such a seal, which is used for example for devices for isotopic uranium enrichment, is known for example from DE 21 54 679.

These seals are moulded together from different materials in one piece. The problem with the seal being formed in this way is that, depending on the geometry of the seal, the differing moduli of elasticity of the materials used means that the seal is not sufficiently stable and differing compression of the material causes it to undergo shearing forces that adversely affect the lifetime of the seal.

JP 2004190806 discloses a seal structure fitted to a joint part of a tubular body, at least two types of rubbers are arranged parallel with each other concentrically to the center of the flow of a fluid. The rubber on the inner peripheral side relative to the center of the flow of the fluid has a higher fluid sealability at room temperatures than any rubbers positioned on the outer peripheral side thereof. The rubber positioned on the outer peripheral side relative to the center of the flow of the fluid has a higher fluid sealability at least in the temperature range of -30 to -50°C than any of rubbers positioned on the inner peripheral side thereof.

The seal structure has an approximately H-shaped cross-sectional profil with a first limb and a second limb and with a crosspiece connecting the limbs.

US 2008/0197578 A1 discloses a multi-piece seal with an outer member and an inner member partly disposed in the outer member. In cross section, the outer member has a C-shape and defines a channel, and the inner member is round and has a pair of lobes extending away from its body.

The invention therefore addresses the problem of providing a closure system on a fuel tank that conforms to the impermeabilities required by the relevant regulations (PZEV, LEV II and LEV III) and is also resistant to alcohol-containing additives and alcohol-containing fuel. The seal to be used according to the invention should in particular be able to withstand mechanical loading and be stable.

The problem addressed by the invention is solved by a closure system on a fuel tank as defined by the features of claim 1 comprising an opening in the wall of the fuel tank and a closure cover which covers the opening and clamps at least one elastomer seal between itself and a border of the tank wall enclosing the opening, the closure system being distinguished by the fact that the elastomer seal is formed as a multilobed sealing cord or multilobed sealing ring surrounding the opening, in such a way that it forms a number of sealing lips that are spaced apart from one another, at least two spaced-apart sealing lips of the elastomer seal consisting of different materials, one of which is substantially impermeable to hydrocarbons and a second is substantially impermeable to alcohol-containing media or alcohol-containing additives.

In the case of the closure system according to the invention, two mutually independently functioning sealing systems are provided, respectively assigned at least one sealing lip of a single sealing ring or single sealing cord, a first portion of the elastomer seal being assigned a material that is impermeable and resistant to hydrocarbon and a second portion being assigned at least one material that is impermeable and resistant to the additives contained in the fuel or to alcohol-containing media. The sealing lips of the elastomer seals are preferably arranged one behind the other with respect to the concentration gradient of the media to be sealed, so that a first material can for example seal the fuel tank completely with respect to hydrocarbons, whereas the alcohols that diffuse through this material are sealed by the second material.

A fluoroelastomer may be provided for example as the first material, a second material may be, for example, an NBR or HNBR (nitrile butadiene rubber or hydrated acrylonitrile butadiene rubber).

Fluororubber or fluororubber mixes come into consideration for example as fluoroelastomers.

The closure system is preferably formed such that the sealing lips enclose between them a diffusion barrier in the form of an air gap.

Instead of a sealing ring with spaced-apart sealing lips arranged on it, the closure system may also comprise a number of sealing rings of different materials placed concentrically one inside the other.

In the case of a preferred variant of the closure system according to the invention, it is provided that an elastomer seal has a number of sealing lips that are spaced apart from one another when viewed in the circumferential direction of the opening. The elastomer seal may, for example, have in cross section an X, K or H profile.

In the case of a preferred variant of the closure system according to the invention, it is provided that the elastomer seal comprises a supporting body, on which at least two sealing lips of different elastomeric materials are integrally formed. The supporting body in this case ensures a corresponding stability for the seal when it is clamped under pressure between the cover flange and the closure cover. The stabilizing supporting body has the effect of ensuring that the seal is not distorted or warped as a result of the different moduli of elasticity of the different materials, which would cause leaks at the interfaces between the seal and the cover closure and/or the seal and the tank wall.

The supporting body expediently consists of a non-elastomeric material, preferably of thermoplastic material.

Such a sealing ring may, for example, have been obtained by the multi-component injection-moulding process, the supporting body having been placed in the mould and different elastomeric sealing materials moulded onto both sides of the supporting body.

In the case of a preferred variant of the closure system according to the invention, it is provided that the elastomer seal has an approximately H-shaped cross-sectional profile with at least one first limb and a second limb and with a crosspiece connecting the limbs, the limbs respectively consisting of different elastomeric materials and the crosspiece connecting the limbs consisting of a thermoplastic material.

The crosspiece may, for example, consist of POM or PA (polyoxymethylene or polyamide).

As already mentioned above, it may be provided that, in the fitted position, the spaced-apart sealing lips of the elastomer seal are arranged one behind the other when viewed in the circumferential direction of the opening.

The invention is explained below on the basis of an exemplary embodiment that is represented in the drawings, in which:
- Figure 1: shows a cross section through a closure system according to the invention as provided by a first exemplary embodiment,
- Figure 2: shows a partial section through a closure system according to the invention as provided by a second exemplary embodiment and
- Figures 3-5: show profiles of different elastomer seals of the closure system according to the invention.

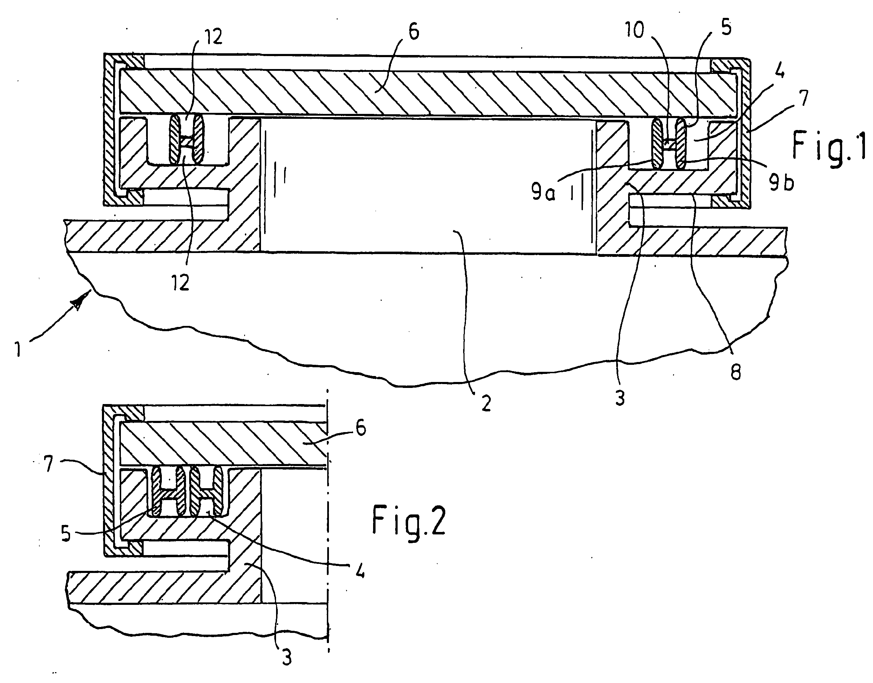

Reference is made first of all to Figure 1, which shows a partial section through a fuel tank 1 in the region of an opening 2.

The fuel tank 1 is formed from thermoplastic material and has been obtained for example by extrusion blow-moulding. However, it may similarly have been produced by injection moulding, thermoforming, rotational sintering or in some other way. The closure system according to the invention is not restricted to fuel tanks made of thermoplastic material, but rather the fuel tank according to the invention may also consist of metal.

The opening 2 in the fuel tank 1 is enclosed at the border by a neck 3, the relative size of which is shown exaggerated with respect to the opening 2. The neck 3 forms a peripheral annular groove 4, in which an elastomer seal 5 is placed. Placed on the neck 3 is a closure cover 6, which is secured on the fuel tank 1 by means of a peripheral clamping ring 7. The clamping ring 7 is of a cross-sectionally approximately C-shaped form. On the one hand, this reaches over the closure cover 6, on the other hand it reaches under the neck 3 or the annular flange 8 formed by the neck 3. The clear height of the annular groove 4 is dimensioned such that the elastomer seal 5 is slightly compressed when the closure cover 6 is secured, so that the sealing lips 9 of the elastomer seal 5 lie under pressure against the closure cover 6 on the one hand and against the annular groove 4 on the other hand.

The design of the closure cover 6 and of the neck 3 is not critical for the invention.

The closure cover may, for example, have passing-through fuel lines, electrical connections or the like, which are not shown here for reasons of simplicity.

The elastomer seal 5 placed in the annular groove 4 of the neck 3 is formed as a sealing cord surrounding the opening 2 and taking the form of a circular ring. It is evident to a person skilled in the art that the elastomer seal 5 does not necessarily have to be formed as a circular ring, but rather may have any desired contour.

In the case of a variant of the closure system according to the invention, it is provided that the elastomer seal has an H profile, i.e. that it comprises a first and a second limb 9a, 9b, which in the fitted position extend approximately perpendicularly. The limbs 9a, 9b of the elastomer seal 5 are connected to one another by an approximately horizontally extending crosspiece 10. The limbs 9a, 9b respectively form two sealing lips 11, a first limb 9a, which is on the inside with respect to the opening 2, consisting for example of a material that is impermeable and resistant to hydrocarbons and the second limb 9b, which is on the outside, consisting of a material that is impermeable and resistant to alcohols or alcohol-containing systems. The first limb may, for example, consist of a fluororubber, whereas the second limb may be formed from an NBR or HNBR. The crosspiece 10 connecting the two limbs, on the other hand, may be formed from a thermoplastic material with a relatively high modulus of elasticity with respect to the limbs 9a, 9b. The limbs 9a, 9b are integrally formed on the crosspiece 10, whereby the elastomer seal 5 is altogether given a certain dimensional stiffness and stability. This reliably prevents warping of the elastomer seal 5 under the influence of fuel.

As revealed in particular by Figure 1, the elastomer seal 5 respectively forms above the crosspiece 10 and below the crosspiece 10 a peripheral groove 12, which is closed on the upper side by the closure cover 6 and is closed on the underside by the lowest point of the annular groove 4.

The grooves 12 of the elastomer seal 5 form an additional diffusion barrier.

In the case of an alternative configuration of the closure system according to the invention (Figure 2), it is provided that two elastomer seals 5 are placed in the annular groove 4 of the neck 3 and are arranged concentrically in relation to one another. Each of the elastomer seals 5 may be made up of different elastomers with different barrier properties; it may alternatively be provided that each elastomer seal respectively comprises sealing lips 11 of a single elastomer, for example the inner elastomer seal 5 consisting of a different material than the outer elastomer seal.

In principle, it is not critical for the invention which material for which sealing system is arranged on the inside or outside.

The elastomer seals 5 as provided by the exemplary embodiment according to Figure 2 may respectively consist completely of an elastomer, but they could respectively have a crosspiece or supporting body of thermoplastic material.

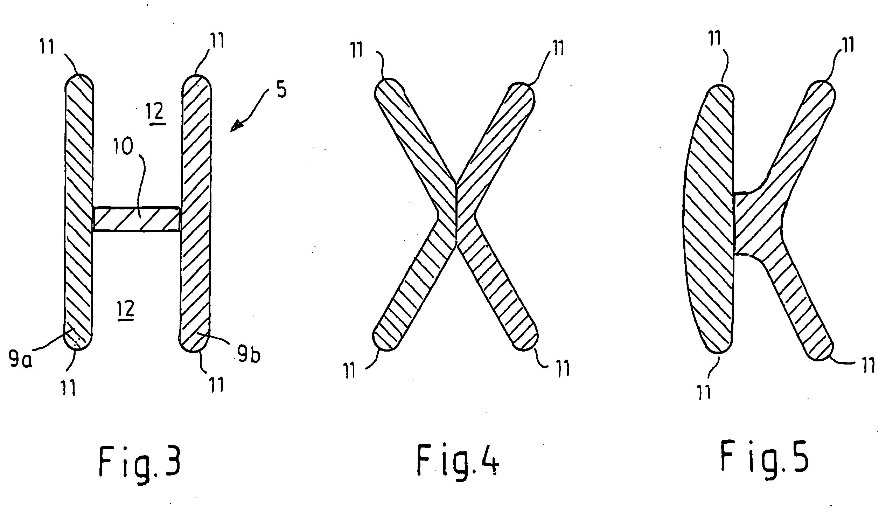

An enlarged representation of the elastomer seal 5 as an H profile is shown for example in Figure 3. The limbs 9a, 9b respectively consist of a first and second elastomeric sealing material, for example the limb 9a consists of a first elastomeric sealing material, the limb 9b consists of a second elastomeric sealing material, whereas the crosspiece 10 consists of a thermoplastic material.

Alternative configurations of the sealing profiles can be seen for example from Figures 4 and 5. The variant of the elastomer seal 5 that is shown in Figure 4 is a so-called X profile, this variant not comprising a stabilizing supporting body. However, it is also conceivable in principle that, in the case of an X profile, the sealing lips 11 may be moulded onto a stabilizing core of thermoplastic material.

Similarly, the elastomer seal 5 may be provided in the form of a K profile, as is represented in Figure 5.

Also in the case of the profiles of the elastomer seal 5 that are represented in Figures 4 and 5, the inner limb is denoted by 9a and the outer limb on the other hand is denoted by 9b.

### List of designations

- 1: Fuel tank
- 2: Opening
- 3: Neck
- 4: Annular groove
- 5: Elastomer seal
- 6: Closure cover
- 7: Clamping ring
- 8: Annular flange
- 9a, 9b: Limbs
- 10: Crosspiece
- 11: Sealing lips
- 12: Groove

## Claims

1. Closure system on a fuel tank (1) comprising an opening (2) in the wall of the fuel tank (1) and a closure cover (6) which covers the opening and clamps at least one elastomer seal (5) between itself and a border of the tank wall enclosing the opening (2), wherein the elastomer seal (5) is formed as a multilobed sealing cord or multilobed sealing ring surrounding the opening (2), in such a way that it forms a number of sealing lips (11) that are spaced apart from one another, at least two spaced-apart sealing lips (11) of the elastomer seal (5) consisting of different materials, **characterized in that** a first material is substantially impermeable to hydrocarbons and a second material is substantially impermeable to alcohol-containing media or alcohol-containing additives.

2. Closure system according to Claim 1, **characterized in that** a first material is a fluoroelastomer and a second material is an NBR or an HNBR.

3. Closure system according to either of Claims 1 and 2, **characterized in that** the sealing lips (11) enclose between them a diffusion barrier in the form of an air gap.

4. Closure system according to one of Claims 1 to 3, **characterized in that** the elastomer seal (5) has in cross section an X, K or H profile.

5. Closure system according to one of Claims 1 to 4, **characterized in that** the elastomer seal (5) comprises a supporting body, on which at least two sealing lips (11) of different elastomeric materials are integrally formed.

6. Closure system according to Claim 5, **characterized in that** the supporting body consists of a non-elastomeric material, preferably of thermoplastic material.

7. Closure body according to one of Claims 1 to 6, **characterized in that** the the elastomer seal (5) has an approximately H-shaped cross-sectional profile with a first limb (9a) and a second limb (9b) and with a crosspiece (10) connecting the limbs (9a, 9b), the limbs (9a, 9b) respectively consisting of different elastomeric materials and the crosspiece (10) connecting the limbs consisting of a thermoplastic material.

8. Closure body according to Claim 7, **characterized in that** the crosspiece consists of POM or PA.

9. Closure system according to one of Claims 1 to 8, **characterized in that**, in the fitted position, the spaced-apart sealing lips (11) of the elastomer seal (5) are arranged one behind the other in the circumferential direction of the opening (2).

## Patentansprüche

1. Verschlusssystem an einem Kraftstoffbehälter (1) umfassend eine Öffnung (2) in der Wand des Kraftstoffbehälters (1) und einen Verschlussdeckel (6), der wenigstens eine Elastomerdichtung (5) zwischen sich und einem die Öffnung (2) umfassenden Rand der Behälterwand einspannt, wobei die Entlastomerdichtung (5) als die Öffnung (2) umgebende, mehrlappige Dichtschnur oder mehrlagiger Dichtring ausgebildet ist, derart, dass sie mehrere voneinander beanstandete Dichtlippen (11) ausbildet, wobei wenigstens zwei voneinander beabstandete Dichtlippen (11) der Elastomerdichtung aus unterschiedlichen Werkstoffen bestehen, **dadurch gekennzeichnet, dass** ein erster Werkstoff im wesentlichen undurchlässig für Kohlenwasserstoffe und ein zweiter Werkstoff im wesentlichen undurchlässig für alkoholhaltige Medien oder alkoholhaltige Additive ist.

2. Verschlusssystem nach Anspruch 1, **dadurch gekennzeichnet, dass** ein erster Werkstoff ein Flourelastomer und ein zweiter Werkstoff ein NBR oder ein HNBR ist.

3. Verschlusssystem nach einem der Ansprüche 1 oder 2, **dadurch gekennzeichnet, dass** die Dichtlippen(11) zwischen sich eine Diffusionsbarriere in Form eines Luftspaltes umschließen.

4. Verschlusssystem nach einem der Ansprüche 1 bis 3, **dadurch gekennzeichnet, dass** die Entlastomerdichtung (5) im Querschnitt ein X, K-oder H-Profil aufweist.

5. Verschlusssystem nach einem der Ansprüche 1 bis 4, **dadurch gekennzeichnet, dass** die Entlastomerdichtung (5) einen Stützkörper umfasst, an welchen wenigstens zwei Dichtlippen (11) aus verschiedenen elastomeren Werkstoffen einstückig angeformt sind.

6. Verschlusssystem nach Anspruch 5, **dadurch gekennzeichnet, dass** der Stützkörper aus einem nicht elastischen Material, vorzugsweise aus einem thermoplastischen Material besteht.

7. Verschlusskörper nach einem der Ansprüche 1 bis 6, **dadurch gekennzeichnet, dass** die Entlastomerdichtung (5) ein im wesentlichen H-förmiges Querschnittsprofil mit einem ersten Schenkel (9 a) und einen zweiten Schenkel (9 b) und einen die Schenkel (9 a, 9 b verbindenden Quersteg (10) umfasst, wobei die Schenkel (9 a, 9 b) jeweils aus unterschiedlichen elastomeren Werkstoffen und der die Schenkel verbindende Quersteg (10) aus einem thermoplastischen Werkstoff besteht.

8. Verschlusskörper nach Anspruch 7, **dadurch gekennzeichnet, dass** der Quersteg aus POM oder PA besteht.

9. Verschlusssystem nach einem der Ansprüche 1 bis 8, **dadurch gekennzeichnet, dass** die voneinander beabstandeten Dichtlippen (11) der Entlastomerdichtung (5) in Einbaulage in Umfangsrichtung der Öffnung (2) hintereinander angeordnet sind.

## Revendications

1. Système de fermeture sur un réservoir de carburant (1) comprenant une ouverture (2) dans la paroi du réservoir de carburant (1) et un couvercle de fermeture (6) qui recouvre l'ouverture et serre au moins un joint élastomère (5) entre lui-même et un bord de la paroi du réservoir renfermant l'ouverture (2), dans lequel le joint élastomère (5) est formé comme un cordon d'étanchéité à lobes multiples ou une bague d'étanchéité à lobes multiples entourant l'ouverture (2), de telle sorte qu'il forme un nombre de lèvres d'étanchéité (11) qui sont espacées les unes des autres, au moins deux lèvres d'étanchéité (11) espacées du joint élastomère (5) étant constituées de matériaux différents, **caractérisé en ce qu'**un premier matériau est sensiblement imperméable aux hydrocarbures et qu'un second matériau est sensiblement imperméable aux milieux contenant de l'alcool ou aux additifs contenant de l'alcool.

2. Système de fermeture selon la revendication 1, **caractérisé en ce qu'**un premier matériau est un fluoroélastomère et un second matériau est un NBR (caoutchouc nitrile-butadiène) ou un HNBR (caoutchouc nitrile-butadiène hydrogéné).

3. Système de fermeture selon l'une ou l'autre des revendications 1 et 2, **caractérisé en ce que** les lèvres d'étanchéité (11) renferment entre elles une barrière de diffusion sous la forme d'un entrefer.

4. Système de fermeture selon l'une des revendications 1 à 3, **caractérisé en ce que** le joint élastomère (5) présente en coupe un profil en X, K ou H.

5. Système de fermeture selon l'une des revendications 1 à 4, **caractérisé en ce que** le joint élastomère (5) comprend un corps de support, sur lequel sont formées d'un seul tenant au moins deux lèvres d'étanchéité (11) de matériaux élastomériques différents.

6. Système de fermeture selon la revendication 5, **caractérisé en ce que** le corps de support est constitué d'un matériau non élastomérique, de préférence d'un matériau thermoplastique.

7. Corps de fermeture selon l'une des revendications 1 à 6, **caractérisé en ce que** le joint élastomère (5) a un profil en coupe approximativement en forme de H avec une première branche (9a) et une seconde branche (9b) et avec une traverse (10) reliant les branches (9a, 9b), les branches (9a, 9b) étant constituées respectivement de matériaux élastomériques différents et la traverse (10) reliant les branches étant constituée d'un matériau thermoplastique.

8. Corps de fermeture selon la revendication 7, **caractérisé en ce que** la traverse est constituée de POM (polyoxyméthylène) ou de PA (polyamide).

9. Système de fermeture selon l'une des revendications 1 à 8, **caractérisé en ce que**, dans la position fixée, les lèvres d'étanchéité (11) espacées du joint élastomère (5) sont agencées l'une derrière l'autre dans la direction circonférentielle de l'ouverture (2).
